# EUROPEAN PATENT SPECIFICATION

(11) **EP 4 183 607 B1**
(45) Date of publication and mention of the grant of the patent: **10.07.2024**
(21) Application number: 21209328.0
(22) Date of filing: 19.11.2021
(51) Int. Cl.: B60J 10/79, B60J 10/77

(54) **A DOOR SYSTEM FOR A VEHICLE**
TÜRSYSTEM FÜR EIN FAHRZEUG
SYSTÈME DE PORTE POUR VÉHICULE

(43) Date of publication of application: 24.05.2023
(73) Proprietor: Volvo Car Corporation, 40531 Göteborg (SE)
(72) Inventor: LORENTSSON, Andreas, 40531 Göteborg (SE)
(74) Representative: Maiwald GmbH

(56) References cited:
- EP-A2- 0 295 660
- WO-A1-2017/076513
- DE-A1- 102006 053 095

## Description

### TECHNICAL FIELD

The present disclosure relates to a door system for a vehicle, a vehicle comprising such a door system and a method for manufacturing such a door system.

### BACKGROUND ART

In a vehicle, a door generally includes a door frame with a window opening and a glass window, which may be raised to close the window opening and lowered to open the window opening. When the glass window is lowered into the open position, the window may be received in a cavity positioned inside the door frame between an outer door panel and an inner door panel. On the other hand, when the glass window is raised into the closed position, peripheral edges of the window may be received in U-shaped glass runs contacting an interior and/or an exterior surfaces of the glass window.

The door, at which the window glass is mounted, may comprise a frame surrounding the edges of the window glass when the window glass is fully raised, or a frameless door, at which the edges of the window glass are at least partially exposed without any frame.
EP 0 295 660 A2 discloses a support and guide structure for windows of a motor vehicle body having at least one door with a substantially vertically movable window which is delimited by a pair of lateral edges and an upper edge. The structure substantially comprises a pair of elongate window support elements, each of these comprises an abutment tongue adapted to allow that part of the rear surface of the window which is contiguous to one of the lateral edges of the window itself to contact it, and a frame tongue orthogonal to the abutment tongue and adapted to surround the said edge of the window. The support element further includes a guide tongue parallel to the abutment tongue, disposed rearwardly of it and projecting towards the central part of the window. A connection wall joins together the abutment tongue and the guide tongue.
WO 2017/076513 A1 discloses a window assembly for a window opening of a motor vehicle. The window assembly comprises a door frame member, a movable window pane, a window guiding profile fastened to the door frame member, and a sealing portion configured to seal or support the window pane. The window guiding profile includes a first guiding portion configured to guide the window pane only at the inner window surface, or at the inner window surface and the front end face.

### SUMMARY

Such door assemblies may be further improved, which provides a tight and safe arrangement of a window glass in a vehicle.

The problem is at least partially solved or alleviated by the subject matter of the independent claims of the present disclosure, wherein further examples are incorporated in the dependent claims. It should be noted that the aspects of the disclosure described in the following apply to the door system for a vehicle, the vehicle comprising such a door system and the method for manufacturing such a door system.

According to the present disclosure, a door system for a vehicle is presented. The door system comprises a door assembly and a lateral roof assembly. The door assembly comprises a door frame body, at least a first sealing member and a glazing element. The lateral roof assembly comprises a lateral roof portion and at least a second sealing member. The door frame body surrounds at least partially the glazing element. The door frame body is movable between an open position and a closed position relative to the lateral roof assembly. The glazing element is adjustable between an open position and a closed position. The first sealing member is arranged between the glazing element and the door frame body and configured to seal the glazing element in the closed position of the glazing element. The second sealing member is arranged at the lateral roof portion and configured to receive at least one edge of the glazing element in the closed position of the glazing element and the door frame body.

Compared to framed door systems, the door system of the present disclosure can optimize a height of an entire door bow section, accordingly driver's sight and a roof height. Further, compared to framed door systems, the door system may allow a flush arrangement of the glazing element, preferably with a b-pillar cover, which can be mounted at a vehicle body. In such a case, a monitoring range of sensors, which may be arranged at a lateral side of the vehicle to monitor its environment, may not be interfered by any protruding components. Further, compared to frameless door systems, the door system may improve Noise Vibration Harshness (NVH) of the vehicle when the door is in the closed position.

The door assembly may be pivotably mounted on the vehicle body. The door frame body may form a skeleton of the door assembly, thus, the door frame body may be pivotably connected to the vehicle body as well. The door frame body may be understood as a basic structure of a vehicle door, at which further components such as door cover, interior/exterior door handle, door hinge, seat adjustment means, sealing elements, door lock, audio system, window operating system, etc. may be arranged.

The door frame body may comprise a window opening, at which the glazing element, in other words a window glass, may be disposed and adjusted between the open position and the closed position. The glazing element may be retracted into the door frame body to open the window opening or advanced towards the window opening to at least partially or entirely close the window opening. In other words, the door frame body may at least partially encompass the glazing element. Still in other words, the door frame body may define an adjustment area of the glazing element.

The first sealing member may be arranged between the door frame body and the glazing element. The first sealing member may be configured to hold the glazing element in the closed position to prevent the glazing element from falling inwardly to the vehicle cabin and to maintain its position.

The lateral roof portion may be a part of the vehicle body. The term lateral roof portion may be understood as an uppermost portion of the vehicle and/or the vehicle body, which may extend from a front windshield to a rear windshield at the lateral side of the vehicle parallel to a driving direction. Thus, the second sealing member may be mounted at the vehicle body via the lateral roof portion, which may be positioned adjacent to the uppermost portion of the door assembly or the door frame body, in the closed position of the door frame body.

The second sealing member may be configured to receive an upper portion of the glazing element, if the glazing element is adjusted into the closed position and the door frame body is in the closed position. In other words, if both of the glazing element and the door frame body are in the closed position, an edge of the glazing element, preferably an upper edge facing the lateral roof portion of the vehicle may be surrounded by the second sealing member. The upper edge of the glazing element may be formed substantially horizontally and parallel to an extension direction of the lateral roof portion.

Generally, the glazing element moves in a vertical direction to open or close the window opening. Hence, when the door assembly is mounted to the vehicle body, in the closed position of the door frame body and the glazing element, the upper edge of the glazing element may be arranged adjacent to the lateral roof portion of the vehicle, at which the second sealing member may be mounted. Consequently, the edge of the glazing element may be received by the second sealing member and held in position without falling primarily outwardly but also inwardly relative to a vehicle cabin. Thus, the second sealing member may ensure the glazing element to be held in position.

The first sealing member and/or the second sealing member may comprise thermoplastic vulcanizate (or thermoplastic elastomer) (TPV), polymer or copolymer such as polypropylene. The first sealing member may comprise a lip seal structure. The second sealing member may be substantially U-shaped to receive the glazing element. Additionally or alternatively, the second sealing member may comprise at least one lip seal structure. The first sealing member and/or the second sealing member may be dimensioned for providing a tight seal between the vehicle body and the door frame body against noise and humidity, thus more comfort in the vehicle cabin.

According to the invention, the lateral roof assembly further comprises a roof trim member. The roof trim member is arranged at the lateral roof portion. The roof trim member receives at least partially the second sealing member. The roof trim member may be dimensioned to extend at least partially along the lateral roof portion of the vehicle. The roof trim member may comprise a cantrail trim, which may extend substantially in a horizontal direction at least partially from the front windshield to the rear windshield at each lateral side of the vehicle.

The roof trim member may at least partially cover the second sealing member, particularly at an outside of the vehicle. Preferably, the second sealing member may be fixedly attached to the lateral roof portion via the roof trim member. Alternatively, each of the second sealing member and the roof trim member may be separately mounted at the lateral roof portion of the vehicle or the roof trim member may be fixedly attached to the lateral roof portion via the second sealing member.

In an example, the lateral roof assembly further comprises a fixing means configured to fix the roof trim member at the lateral roof portion. The fixing means may comprise a mechanical means such as screw, rivet or clamp or an adhesive means. The roof trim member may be required to be fixedly and safely mounted at the lateral roof portion of the vehicle. Accordingly, the roof trim member may be coupled with at least one fixing means to be fixedly attached at the lateral roof portion of the vehicle. Alternatively or additionally, the roof trim member may be fixed to the lateral roof portion by a force-fitting manner or a form-fitting manner.

In an example, the second sealing member is inserted in the roof trim member by means of press fit, interference fit or snap fit. The second sealing member may be fixedly held by the roof trim member to be arranged at the lateral roof portion of the vehicle. The second sealing member may be inserted by a force-fitting manner such as press fit or interference fit or a form-fitting manner such as snap fit to be fastened in the roof trim member.

In an example, the door assembly further comprises a third sealing member. The third sealing member is arranged at the door frame body and configured to seal between the door frame body and the lateral roof portion in the closed position of the door frame body. The third sealing member may comprise the same material as the first and/or the second sealing member. The third sealing member may comprise a tubular shape and/or lip seal structure. The third sealing member may be arranged between the vehicle body and the door frame body. The third sealing member may be attached to the door frame body facing the vehicle body, i.e. the lateral roof portion.

The third sealing member may be mounted at an uppermost portion of the door frame body facing the lateral roof portion of the vehicle. In the closed position of the door frame body, the third sealing member may be interposed between the vehicle body, i.e. lateral roof portion, and the door frame body. Hence, a direct contact between the door frame body and the vehicle body, both of which may comprise a metal material having a relative high strength, may be avoided. In addition, the third sealing member may be dimensioned for providing a tight seal between the vehicle body and the door frame body against noise and humidity, thus more comfort in the vehicle cabin. Further, the third sealing member may absorb an impact transferred from outside through the door frame body.

In an example, the lateral roof assembly further comprises a fourth sealing member. The fourth sealing member is arranged at the lateral roof portion and configured to seal between the door frame body and the lateral roof portion in the closed position of the door frame body. In addition to the third sealing member, the fourth sealing member may be arranged between the vehicle body and the door frame body. The fourth sealing member may comprise the same material and shape as the third sealing member. The third sealing member and the fourth sealing member may be positioned next to or apart from each other along a cavity between the lateral roof portion of the vehicle and the door frame body. Accordingly, a tight seal against noise and humidity may be provided between the door frame body and the lateral roof portion in the closed position of the door frame body. Further, the third sealing member may absorb an impact transferred from outside through the door frame body.

Alternatively, the third sealing member may be connected to the vehicle body, i.e. lateral roof portion of the vehicle and the fourth sealing member may be connected to the door frame body. Further, both of the third sealing member and the fourth sealing member may be also connected to the door frame body or the lateral roof portion of the vehicle.

In an example, the third sealing member and the fourth sealing member are arranged substantially perpendicular to each other in the closed position of the door frame body. Since the door frame body may comprise a cavity to receive the glazing element when opening or auxiliary components, the door frame body may have a certain width. The third sealing member and the fourth sealing member may be arranged at least partially along a circumferential direction of the door frame facing the lateral roof portion of the vehicle to reliably seal between the door frame body and the lateral roof portion in the closed position of the door frame body.

For instance, the third sealing member may seal between the door frame body and the lateral roof portion parallel to a closing direction of the glazing element. Further, the fourth sealing member may seal between the door frame body and the lateral roof portion perpendicular to the closing direction of the glazing element. In other words, between the door frame body and the lateral roof portion of the vehicle a pair of the elastic element may be arranged perpendicularly to each other to damp any impact, noise, humidity or the like transmitted from outside in direction to the cabin of the vehicle.

According to the invention, the edge of the glazing element to be received by the first sealing member in the closed position of the glazing element and in the closed position of the door frame body is an upper horizontal edge of the glazing element. If both of the glazing element and the door frame body are in the closed position, an edge of the glazing element, preferably the upper edge facing the lateral roof portion of the vehicle may be surrounded by the second sealing member.

In an example, the door assembly further comprises at least one run seal member. The run seal member is arranged at the door frame body and configured to receive at least one vertical edge of the glazing element. The run seal member may comprise substantially a U-shape and receive at least one, preferably both of the lateral, i.e. vertical edges of the glazing element. Together with the second sealing member, the run seal member may entirely encompass the glazing element, if the glazing element is raised into the closed positon and the door frame body is also in the closed position. Accordingly, the glazing element may be reliably sealed.

Each run seal member may be integrally formed with the first sealing member. Accordingly, the run seal member may hold the glazing element in position together with the first sealing member, particularly in the closed position of the glazing element to prevent the glazing element from falling inwardly to the vehicle cabin.

In an example, the first sealing member, the second sealing member, the third sealing member and/or the fourth sealing member comprise a tubular seal element and/or a lip seal element. However, the shape of each sealing member may not limited to those seal elements. The first sealing member, the second sealing member, the third sealing member and/or the fourth sealing member may be mainly configured to hold the door system and its components in position, particularly in its closed position. They may be also configured to provide a tight seal between the vehicle body, particularly the lateral roof portion and the door assembly against noise and humidity to provide more comfort in the vehicle cabin.

In an example, the door assembly further comprises a concealing element arranged to cover the door frame body. The concealing element may comprise a material such as plastic, which may be light and easily processed in order to adapt it to a shape to be assembled to the door frame body. The concealing element may be configured to retain the door frame body and/or sealing members and hide them from the outside of the door assembly.

According to the present disclosure, a vehicle is presented. The vehicle comprises a door system as described above. A vehicle body of the vehicle may comprise a lateral roof portion extending from a front windshield to a rear windshield. The lateral roof portion may face an upper portion of a door assembly when the door assembly, i.e. a door frame body and/or a glazing element, is in a closed position. Accordingly, a tight seal between the vehicle body and the door assembly may be ensured.

In an example, the vehicle comprises at least two door assemblies, wherein the first door assembly is a front door assembly and the second door assembly is a rear door assembly. A first glazing element of the first door assembly and a second glazing element of the second door assembly are arranged flush with each other in case of a closed position of the door assemblies and glazing elements. The flush arrangement of the glazing elements may avoid aerodynamic drag, especially at high vehicle speeds, limiting the vehicle's fuel efficiency and speed. tightness the front door and/or rear door may be improved

Preferably, the vehicle body may comprise two lateral roof portions, which are arranged parallel to each other. Hence, the door assembly may be arranged symmetrically at both lateral sides of the vehicle.

In an example, between the first glazing element and the second glazing element cover member may be arranged, which may be configured to cover a b-pillar of the vehicle. In other words, between the first door assembly/first glazing element and the second door assembly/second glazing element the b-pillar of the vehicle may be positioned. The vehicle may comprise several sensors at its lateral side for monitoring environment, thus, assisting autonomous driving functions of the vehicle. Such sensors may be preferably located at the b-pillar. The cover member may be configured to house such sensors.

The first glazing element, the second glazing element and the cover member may be arranged flush or non-flush relative to each other. In case of a flush arrangement, a monitoring range of sensors, which may be arranged at a lateral side of the vehicle to monitor its environment, may not be interfered by any protruding components. Preferably, such door assembly may be arranged at both lateral side of the vehicle relative to a driving direction.

According to the present disclosure, a method for manufacturing a door assembly for a vehicle is presented. The method comprises
- providing a door assembly comprising a door frame body, at least a first sealing member and a glazing element,
- providing a lateral roof assembly comprising a lateral roof portion and at least a second sealing member,
- at least partially surrounding the glazing element by the door frame body,
- arranging the first sealing member between the glazing element and the door frame body, and
- arranging the second sealing member at the lateral roof portion.

The door frame body is movable between an open position and a closed position relative to the lateral roof assembly. The glazing element is adjustable between an open position and a closed position. The first sealing member is configured to seal the glazing element in the closed position of the glazing element. The second sealing member is configured to receive at least one edge of the glazing element in the closed position of the glazing element and the door frame body.

It should be noted that the above examples may be combined with each other irrespective of the aspect involved. Accordingly, the method may be combined with structural features and, likewise, the system may be combined with features described above with regard to the method.

These and other aspects of the present examples will become apparent from and elucidated with reference to the examples described hereinafter.

### BRIEF DESCRIPTION OF DRAWINGS

Exemplary aspects will be described in the following with reference to the following drawings.
- Fig. 1: shows schematically and exemplarily an exampleof a vehicle comprising according to the present disclosure.
- Fig. 2: shows schematically and exemplarily an exampleof a door system according to the present disclosure.

### DETAILED DESCRIPTION

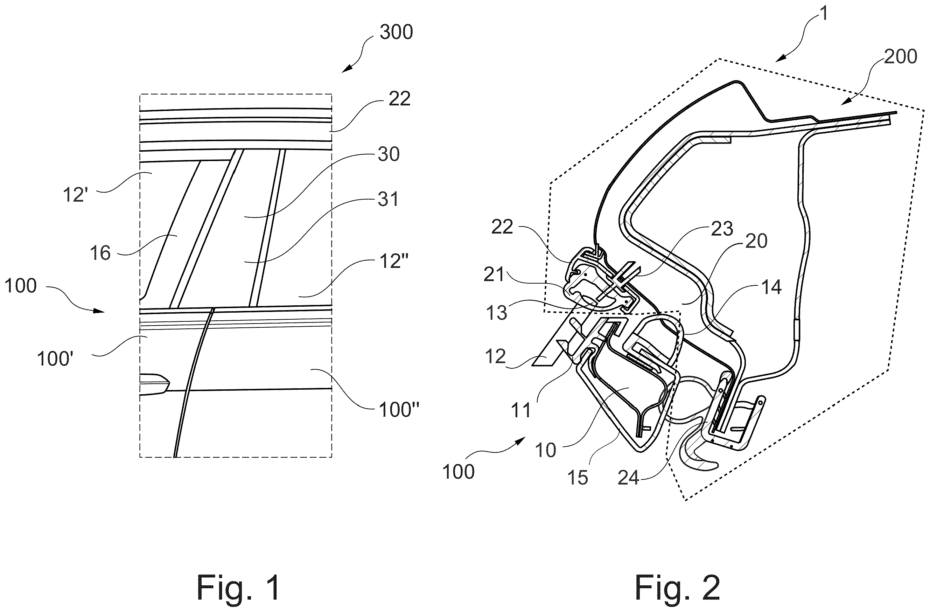

Fig. 1 shows a vehicle 300 comprising a door system 1. The door system 1 comprises a door assembly 100 and a lateral roof assembly 200 (see also Fig. 2). The door assembly 100 may be a first (front) door assembly 100' and/or a second (rear) door assembly 100".

A vehicle body of the vehicle 300 comprises at least one b-pillar 30 arranged between a first glazing element 12' of the first door assembly 100' and a second glazing element 12" of the second door assembly 100". The vehicle 300 may comprise several sensors at its lateral side for monitoring environment, thus, assisting autonomous driving functions of the vehicle 300. Such sensors may be preferably located at the b-pillar 30. A cover member 31 may be configured to house such sensors. The first glazing element 12', the second glazing element 12" and the cover member 31 of the b-pillar 30 may be arranged flush or non-flush relative to each other. In case of a flush arrangement, a monitoring range of sensors may not be interfered by any protruding components.

As shown in Fig. 2, the door assembly 100 comprises a door frame body 10 and a glazing element 12. The door frame body 10 may be pivotably connected to the vehicle body of the vehicle 300. The door frame body 10 is, thus, movable between an open position and a closed position relative to the vehicle 300. The door frame body 10 surrounds at least partially the glazing element 12. The door frame body 10 comprises a window opening, at which the glazing element 12 may be adjusted between an open position and a closed position.

The lateral roof assembly 200 comprises a lateral roof portion 20 and a roof trim member 22. The lateral roof portion 20 may be the uppermost portion of the vehicle 300 and/or the vehicle body, which extends from a front windshield (now shown) to a rear windshield (now shown) at each lateral side of the vehicle 300 relative to a driving direction of the vehicle 300.

The roof trim member 22 is mounted at the lateral roof portion 20 via a fixing means 23. The fixing means 23 may comprise a mechanical means such as screw, rivet or clamp or an adhesive means. The roof trim member 22 is dimensioned to extend at least partially along the lateral roof portion 20 of the vehicle 300.

The door assembly 100 further comprises a first sealing member 11 and the lateral roof assembly 200 further comprises a second sealing member 21. The first sealing member 11 is arranged between the glazing element 12 and the door frame body 10 and configured to seal the glazing element 12 in the closed position of the glazing element 12. The first sealing member 11 is particularly formed to prevent the glazing element 12 from falling inwardly to the vehicle cabin and maintain its position.

The second sealing member 21 is configured to receive at least one edge of the glazing element 12 in the closed position of the glazing element 12 and the door frame body 10. The second sealing member 21 is mounted at the lateral roof portion 20 of the vehicle 300 via the roof trim member 22. The roof trim member 22 receives at least partially the second sealing member 21. In other words, the second sealing member 21 is inserted in the roof trim member 22 by means of press fit, interference fit or snap-in fit. Alternatively, the second sealing member 21 may be directly mounted at the lateral roof portion 20 without the roof trim member 22.

If the glazing element 12 is raised into the closed position and the door assembly 100 is also in the closed position, an edge of the glazing element 12, preferably an upper edge 13 facing the lateral roof portion 20 is surrounded by the second sealing member 21, which is directly mounted at the lateral roof portion 20 together with the roof trim member 22. Therefore, substantially no gap is visible between the lateral roof portion 20 and the door assembly 100 from outside of the vehicle 300.

The door assembly 100 further comprises a third sealing member 14 and the lateral roof assembly 200 further comprises a fourth sealing member 24. The third sealing member 14 is connected to the door frame body 10 to seal between the door frame body 10 and the lateral roof portion 20 of the vehicle 300 in the closed position of the door frame body 10. The fourth sealing member 24 is arranged at the lateral roof portion 20 and configured to seal between the door frame body 10 and the lateral roof portion 20 in the closed position of the door frame body 10.

In the closed position of the door frame body 10, both of the third sealing member 14 and the fourth sealing member 24 are interposed between the vehicle body, i.e. lateral roof portion 20, and the door frame body 10. Preferably, the third sealing member 14 and the fourth sealing member 24 are arranged along a circumference of the door frame body 10 and/or the lateral roof portion 20. Hence, a direct contact between the door frame body 10 and the vehicle body, both of which may comprise a metal material having a relative high strength, may be avoided.

The first sealing member 11, the second sealing member 21, the third sealing member 14 and/or the fourth sealing member 24 may comprise thermoplastic vulcanizate (or thermoplastic elastomer) (TPV), polymer or copolymer such as polypropylene. The first sealing member 11 comprises a lip seal structure. The second sealing member 21 is substantially U-shaped to receive the upper edge 13 of the glazing element 12. The third sealing member 14 and/or the fourth sealing member 24 comprise a tubular seal element. However, the shape of each sealing member is not limited to the mentioned formed. Hence, the first sealing member 11, the second sealing member 21, third sealing member 14 and/or the fourth sealing member 24 comprise a tubular seal element and/or a lip seal element.

The first sealing member 11, the second sealing member 21, the third sealing member 14 and/or fourth sealing member 24 may be dimensioned such that it provides a tight seal between the vehicle body and the door frame body 10 against noise and humidity to provide more comfort in the vehicle cabin. Further, at least the third sealing member 14 and the fourth sealing member 24 are also configured to absorb an impact transferred from outside through the door frame body 10.

The door assembly 100 further comprises a run seal member 16 (see Fig. 1). The run seal member 16 is arranged at the door frame body 10 and configured to receive at least one, preferably both vertical edges of the glazing element 12 in case of the closed position of the glazing element 12. Together with the second sealing member 21, the run seal member 16 may entirely encompass the glazing element 12, if the glazing element 12 is raised into the closed positon and the door frame body 10 is also in the closed position.

The door assembly 100 further comprises a concealing element 15 arranged to cover the door frame body 10. The concealing element 15 is configured to retain the door frame body 10 and/or sealing members and hide them from the outside of the door assembly 100.

It has to be noted that embodiments of the disclosure are described with reference to aspects. In particular, some of the aspects of the disclosure are described with reference to method type claims whereas other aspects are described with reference to the device type claims. However, a person skilled in the art will gather from the above and the following description that, unless otherwise notified, in addition to any combination of features belonging to one type of subject matter also any combination between features relating to different aspects is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

### List of references signs

- 1: door system
- 100: door assembly
- 200: lateral roof assembly
- 300: vehicle
- 10: door frame body
- 11: first sealing member
- 12: glazing element
- 13: upper edge of the glazing element
- 14: third sealing member
- 15: concealing element
- 16: run seal member
- 20: lateral roof portion
- 21: second sealing member
- 22: roof trim member
- 23: fixing means
- 24: fourth sealing member
- 30: b-pillar
- 31: cover member

## Claims

1. A door system (1) for a vehicle (300), comprising
- a door assembly (100), and
- a lateral roof assembly (200),
the door assembly (100) comprising a door frame body (10), at least a first sealing member (11) and a glazing element (12),
the lateral roof assembly (200) comprising a lateral roof portion (20) and at least a second sealing member (21),
the door frame body (10) surrounding at least partially the glazing element (12),
the door frame body (10) being movable between an open position and a closed position relative to the lateral roof assembly (200),
the glazing element (12) being adjustable between an open position and a closed position, the first sealing member (11) being arranged between the glazing element (12) and the door frame body (10) and configured to seal the glazing element (12) in the closed position of the glazing element (12),
the second sealing member (21) being arranged at the lateral roof portion (20) and configured to receive at least one edge (13) of the glazing element (12) in the closed position of the glazing element (12) and the door frame body (10),
the lateral roof assembly (200) further comprising a roof trim member (22), the roof trim member (22) being arranged at the lateral roof portion (20), the roof trim member (22) receiving at least partially the second sealing member (21), **characterized in**
the edge of the glazing element (12) to be received by the first sealing member (11) in the closed position of the glazing element (12) and in the closed position of the door frame body (10) being an upper horizontal edge (13) of the glazing element (12).

2. The door system (1) according to claim 1, the second sealing member (21) being inserted in the roof trim member (22) by means of press fit, interference fit or snap-in fit.

3. The door system (1) according to claim 1 or 2, the lateral roof assembly (200) further comprising a fixing means (23), the fixing means (23) being configured to fix the roof trim member (22) at the lateral roof portion (20).

4. The door system (1) according to any of the preceding claims 1 to 3, the door assembly (100) further comprising a third sealing member (14), the third sealing member (14) being arranged at the door frame body (10) and configured to seal between the door frame body (10) and the lateral roof portion (20) in the closed position of the door frame body (10).

5. The door system (1) according to any of the preceding claims 1 to 4, the lateral roof assembly (200) further comprising a fourth sealing member (24), the fourth sealing member (24) being arranged at the lateral roof portion (20) and configured to seal between the door frame body (10) and the lateral roof portion (20) in the closed position of the door frame body (10).

6. The door system (1) according to claim 4 and 5, the third sealing member (14) and the fourth sealing member (24) being arranged substantially perpendicular to each other in the closed position of the door frame body (10).

7. The door system (1) according to any of the preceding claims 1 to 6, the door assembly (100) further comprising at least one run seal member (16), the run seal member (16) being arranged at the door frame body (10) and configured to receive at least one vertical edge of the glazing element (12).

8. The door system (1) according to any of the preceding claims 1 to 7, the first sealing member (11), the second sealing member (21), the third sealing member (14) and/or fourth sealing member (24) comprising a tubular seal element and/or a lip seal element.

9. The door system (1) according to any of the preceding claims 1 to 8, the door assembly (100) further comprising a concealing element (15), the concealing element (15) being arranged to cover the door frame body (10).

10. A vehicle (300) comprising a door system (1) according to any of the preceding claims 1 to 9.

11. The vehicle (300) according to claim 10, comprising at least two door assemblies (100', 100"), the first door assembly (100') being a front door assembly and the second door assembly (100") being a rear door assembly, the first glazing element (12') of the first door assembly (100') and the second glazing element (12") of the second door assembly (100") being arranged flush with each other in case of a closed position of the door assemblies (100', 100") and glazing elements (12', 12").

12. A method for manufacturing a door system (1), comprising
- providing a door assembly (100) comprising a door frame body (10), at least a first sealing member (11) and a glazing element (12),
- providing a lateral roof assembly (200) comprising a lateral roof portion (20) and at least a second sealing member (21),
- at least partially surrounding the glazing element (12) by the door frame body (10),
- arranging the first sealing member (11) between the glazing element (12) and the door frame body (10),
- arranging the second sealing member (21) at the lateral roof portion (20), and
- arranging a roof trim member (22) at the lateral roof portion (20),
the door frame body (10) being movable between an open position and a closed position relative to the lateral roof assembly (200),
the glazing element (12) being adjustable between an open position and a closed position,
the first sealing member (11) being configured to seal the glazing element (12) in the closed position of the glazing element (12),
the second sealing member (21) being configured to receive at least one edge (13) of the glazing element (12) in the closed position of the glazing element (12) and the door frame body (10), and
the roof trim member (22) receiving at least partially the second sealing member (21)
the edge of the glazing element (12) to be received by the first sealing member (11) in the closed position of the glazing element (12) and in the closed position of the door frame body (10) being an upper horizontal edge (13) of the glazing element (12).

## Patentansprüche

1. Ein Türsystem (1) für ein Fahrzeug (300), umfassend
- eine Türanordnung (100) und
- eine seitliche Dachanordnung (200),
wobei die Türanordnung (100) einen Türrahmenkörper (10), zumindest ein erstes Dichtungselement (11) und ein Verglasungselement (12) umfasst,
wobei die seitliche Dachanordnung (200) einen seitlichen Dachabschnitt (20) und zumindest ein zweites Dichtungselement (21) umfasst,
wobei der Türrahmenkörper (10) das Verglasungselement (12) zumindest teilweise umgibt,
wobei der Türrahmenkörper (10) relativ zur seitlichen Dachanordnung (200) zwischen einer offenen Position und einer geschlossenen Position bewegbar ist,
wobei das Verglasungselement (12) zwischen einer offenen Position und einer geschlossenen Position verstellbar ist,
wobei das erste Dichtungselement (11) zwischen dem Verglasungselement (12) und dem Türrahmenkörper (10) angeordnet ist und dazu ausgebildet ist, das Verglasungselement (12) in der geschlossenen Position des Verglasungselements (12) abzudichten,
wobei das zweite Dichtungselement (21) am seitlichen Dachabschnitt (20) angeordnet und dazu ausgebildet ist, in der geschlossenen Position des Verglasungselements (12) und des Türrahmenkörpers (10) zumindest eine Kante (13) des Verglasungselements (12) aufzunehmen,
wobei die seitliche Dachanordnung (200) ferner ein Dachverkleidungselement (22) umfasst, wobei das Dachverkleidungselement (22) am seitlichen Dachabschnitt (20) angeordnet ist und das Dachverkleidungselement (22) das zweite Dichtungselement (21) zumindest teilweise aufnimmt,
**dadurch gekennzeichnet, dass** die Kante des Verglasungselements (12), die in der geschlossenen Position des Verglasungselements (12) und in der geschlossenen Position des Türrahmenkörpers (10) vom ersten Dichtungselement (11) aufgenommen wird, eine obere horizontale Kante (13) des Verglasungselements (12) ist.

2. Das Türsystem (1) nach Anspruch 1, wobei das zweite Dichtungselement (21) mittels Presspassung, Übermaßpassung oder Schnapppassung in das Dachverkleidungselement (22) eingesetzt ist.

3. Das Türsystem (1) nach Anspruch 1 oder 2, wobei die seitliche Dachanordnung (200) ferner ein Befestigungsmittel (23) umfasst, wobei das Befestigungsmittel (23) dazu ausgebildet ist, das Dachverkleidungselement (22) an dem seitlichen Dachabschnitt (20) zu befestigen.

4. Das Türsystem (1) nach einem der vorhergehenden Ansprüche 1 bis 3, wobei die Türanordnung (100) ferner ein drittes Dichtungselement (14) umfasst, wobei das dritte Dichtungselement (14) am Türrahmenkörper (10) angeordnet ist und dazu ausgebildet ist, in der geschlossenen Position des Türrahmenkörpers (10) zwischen dem Türrahmenkörper (10) und dem seitlichen Dachabschnitt (20) abzudichten.

5. Das Türsystem (1) nach einem der vorhergehenden Ansprüche 1 bis 4, wobei die seitliche Dachanordnung (200) ferner ein viertes Dichtungselement (24) umfasst, wobei das vierte Dichtungselement (24) am seitlichen Dachabschnitt (20) angeordnet ist und dazu ausgebildet ist, in der geschlossenen Position des Türrahmenkörpers (10) zwischen dem Türrahmenkörper (10) und dem seitlichen Dachabschnitt (20) abzudichten.

6. Das Türsystem (1) nach Anspruch 4 und 5, wobei das dritte Dichtungselement (14) und das vierte Dichtungselement (24) in der geschlossenen Position des Türrahmenkörpers (10) im Wesentlichen senkrecht zueinander angeordnet sind.

7. Das Türsystem (1) nach einem der vorhergehenden Ansprüche 1 bis 6, wobei die Türanordnung (100) ferner zumindest ein Laufdichtungselement (16) umfasst, wobei das Laufdichtungselement (16) am Türrahmenkörper (10) angeordnet ist und dazu ausgebildet ist, zumindest eine vertikale Kante des Verglasungselements (12) aufzunehmen.

8. Das Türsystem (1) nach einem der vorhergehenden Ansprüche 1 bis 7, wobei das erste Dichtungselement (11), das zweite Dichtungselement (21), das dritte Dichtungselement (14) und/oder das vierte Dichtungselement (24) ein rohrförmiges Dichtungselement und/oder ein Lippendichtungselement umfasst.

9. Das Türsystem (1) nach einem der vorhergehenden Ansprüche 1 bis 8, wobei die Türanordnung (100) ferner ein Abdeckelement (15) umfasst, wobei das Abdeckelement (15) so angeordnet ist, dass es den Türrahmenkörper (10) abdeckt.

10. Ein Fahrzeug (300) umfassend ein Türsystem (1) nach einem der vorhergehenden Ansprüche 1 bis 9.

11. Das Fahrzeug (300) nach Anspruch 10, das zumindest zwei Türanordnungen (100', 100") umfasst, wobei die erste Türanordnung (100') eine Vordertüranordnung und die zweite Türanordnung (100") eine Hintertüranordnung ist, wobei das erste Verglasungselement (12') der ersten Türanordnung (100') und das zweite Verglasungselement (12") der zweiten Türanordnung (100") im Falle einer geschlossenen Position der Türanordnungen (100', 100") und Verglasungselemente (12', 12") bündig zueinander angeordnet sind.

12. Ein Verfahren zur Herstellung eines Türsystems (1), umfassend
- Bereitstellen einer Türanordnung (100), die einen Türrahmenkörper (10), zumindest ein erstes Dichtungselement (11) und ein Verglasungselement (12) umfasst,
- Bereitstellen einer seitlichen Dachanordnung (200), die einen seitlichen Dachabschnitt (20) und zumindest ein zweites Dichtungselement (21) umfasst,
- zumindest teilweises Umgeben des Verglasungselements (12) durch den Türrahmenkörper (10),
- Anordnen des ersten Dichtungselements (11) zwischen dem Verglasungselement (12) und dem Türrahmenkörper (10),
- Anordnen des zweiten Dichtungselements (21) am seitlichen Dachabschnitt (20), und
- Anordnen eines Dachverkleidungselements (22) am seitlichen Dachabschnitt (20),
wobei der Türrahmenkörper (10) relativ zur seitlichen Dachanordnung (200) zwischen einer offenen Position und einer geschlossenen Position bewegbar ist,
wobei das Verglasungselement (12) zwischen einer offenen Position und einer geschlossenen Position verstellbar ist,
wobei das erste Dichtungselement (11) dazu ausgebildet ist, das Verglasungselement (12) in der geschlossenen Position des Verglasungselements (12) abzudichten,
wobei das zweite Dichtungselement (21) dazu ausgebildet ist, in der geschlossenen Position des Verglasungselements (12) und des Türrahmenkörpers (10) zumindest eine Kante (13) des Verglasungselements (12) aufzunehmen, und
das Dachverkleidungselement (22) das zweite Dichtungselement (21) zumindest teilweise aufnimmt
wobei die Kante des Verglasungselements (12), die in der geschlossenen Position des Verglasungselements (12) und in der geschlossenen Position des Türrahmenkörpers (10) vom ersten Dichtungselement (11) aufgenommen wird, eine obere horizontale Kante (13) des Verglasungselements (12) ist.

## Revendications

1. Système de porte (1) pour un véhicule (300), comprenant :
- un ensemble porte (100) et
- un ensemble toit latéral (200),
l'ensemble porte (100) comprenant un corps de cadre de porte (10), au moins un premier élément d'étanchéité (11) et un élément de vitrage (12),
l'ensemble toit latéral (200) comprenant une partie de toit latéral (20) et au moins un deuxième élément d'étanchéité (21),
le corps de cadre de porte (10) entourant au moins partiellement l'élément de vitrage (12),
le corps de cadre de porte (10) pouvant être déplacé entre une position ouverte et une position fermée par rapport à l'ensemble toit latéral (200),
l'élément de vitrage (12) étant réglable entre une position ouverte et une position fermée,
le premier élément d'étanchéité (11) étant disposé entre l'élément de vitrage (12) et le corps de cadre de porte (10) et configuré pour assurer l'étanchéité de l'élément de vitrage (12) dans la position fermée de l'élément de vitrage (12),
le deuxième élément d'étanchéité (21) étant disposé sur la partie de toit latéral (20) et configuré pour recevoir au moins un bord (13) de l'élément de vitrage (12) dans la position fermée de l'élément de vitrage (12) et du corps de cadre de porte (10),
l'ensemble toit latéral (200) comprenant en outre un élément de garniture de toit (22), l'élément de garniture de toit (22) étant disposé sur la partie de toit latéral (20), l'élément de garniture de toit (22) recevant au moins partiellement le deuxième élément d'étanchéité (21),
**caractérisé en ce que**
le bord de l'élément de vitrage (12) destiné à être reçu par le premier élément d'étanchéité (11) dans la position fermée de l'élément de vitrage (12) et dans la position fermée du corps de cadre de porte (10) est un bord horizontal supérieur (13) de l'élément de vitrage (12).

2. Système de porte (1) selon la revendication 1, le deuxième élément d'étanchéité (21) étant inséré dans l'élément de garniture de toit (22) au moyen d'un ajustement par pression, d'un ajustement par serrage ou d'un ajustement par encliquetage.

3. Système de porte (1) selon la revendication 1 ou 2, l'ensemble toit latéral (200) comprenant en outre un moyen de fixation (23), le moyen de fixation (23) étant configuré pour fixer l'élément de garniture de toit (22) à la partie de toit latéral (20).

4. Système de porte (1) selon l'une quelconque des revendications précédentes 1 à 3, l'ensemble porte (100) comprenant en outre un troisième élément d'étanchéité (14), le troisième élément d'étanchéité (14) étant disposé au niveau du corps de cadre de porte (10) et configuré pour assurer l'étanchéité entre le corps de cadre de porte (10) et la partie de toit latéral (20) dans la position fermée du corps de cadre de porte (10).

5. Système de porte (1) selon l'une quelconque des revendications précédentes 1 à 4, l'ensemble toit latéral (200) comprenant en outre un quatrième élément d'étanchéité (24), le quatrième élément d'étanchéité (24) étant disposé au niveau de la partie de toit latéral (20) et configuré pour assurer l'étanchéité entre le corps de cadre de porte (10) et la partie de toit latéral (20) dans la position fermée du corps de cadre de porte (10).

6. Système de porte (1) selon les revendications 4 et 5, le troisième élément d'étanchéité (14) et le quatrième élément d'étanchéité (24) étant disposés sensiblement perpendiculairement l'un à l'autre dans la position fermée du corps de cadre de porte (10).

7. Système de porte (1) selon l'une quelconque des revendications précédentes 1 à 6, l'ensemble porte (100) comprenant en outre au moins un élément de joint de course (16), l'élément de joint de course (16) étant disposé au niveau de corps de cadre de porte (10) et configuré pour recevoir au moins un bord vertical de l'élément de vitrage (12) .

8. Système de porte (1) selon l'une quelconque des revendications précédentes 1 à 7, le premier élément d'étanchéité (11), le deuxième élément d'étanchéité (21), le troisième élément d'étanchéité (14) et/ou le quatrième élément d'étanchéité (24) comprenant un élément de joint tubulaire et/ou un élément de joint à lèvre.

9. Système de porte (1) selon l'une quelconque des revendications précédentes 1 à 8, l'ensemble porte (100) comprenant en outre un élément de masquage (15), l'élément de masquage (15) étant disposé de manière à couvrir le corps de cadre de porte (10).

10. Véhicule (300) comprenant un système de porte (1) selon l'une quelconque des revendications précédentes 1 à 9.

11. Véhicule (300) selon la revendication 10, comprenant au moins deux ensembles porte (100', 100"), le premier ensemble porte (100') étant un ensemble porte avant et le deuxième ensemble porte (100'') étant un ensemble porte arrière, le premier élément de vitrage (12') du premier ensemble porte (100') et le deuxième élément de vitrage (12") du deuxième ensemble porte (100'') étant disposés en affleurement l'un par rapport à l'autre en cas de position fermée des ensembles porte (100', 100'') et des éléments de vitrage (12', 12").

12. Procédé de fabrication d'un système de porte (1), comprenant de :
- fournir un ensemble porte (100) comprenant un corps de cadre de porte (10), au moins un premier élément d'étanchéité (11) et un élément de vitrage (12),
- fournir un ensemble toit latéral (200) comprenant une partie de toit latéral (20) et au moins un deuxième élément d'étanchéité (21),
- entourer au moins partiellement l'élément de vitrage (12) par le corps de cadre de porte (10),
- disposer le premier élément d'étanchéité (11) entre l'élément de vitrage (12) et le corps de cadre de porte (10),
- disposer le deuxième élément d'étanchéité (21) au niveau de la partie de toit latéral (20), et
- disposer un élément de garniture de toit (22) au niveau de la partie de toit latéral (20),
le corps de cadre de porte (10) pouvant être déplacé entre une position ouverte et une position fermée par rapport à l'ensemble toit latéral (200),
l'élément de vitrage (12) étant réglable entre une position ouverte et une position fermée,
le premier élément d'étanchéité (11) étant configuré pour assurer l'étanchéité de l'élément de vitrage (12) dans la position fermée de l'élément de vitrage (12),
le deuxième élément d'étanchéité (21) étant configuré pour recevoir au moins un bord (13) de l'élément de vitrage (12) dans la position fermée de l'élément de vitrage (12) et du corps de cadre de porte (10), et
l'élément de garniture de toit (22) recevant au moins partiellement le deuxième élément d'étanchéité (21),
le bord de l'élément de vitrage (12) destiné à être reçu par le premier élément d'étanchéité (11) dans la position fermée de l'élément de vitrage (12) et dans la position fermée du corps de cadre de porte (10) étant un bord horizontal supérieur (13) de l'élément de vitrage (12).
